Europäisches Patentamt

(19) European Patent Office

Office européen des brevets

(11) Veröffentlichungsnummer: **0 076 377**
**B1**

# (12) EUROPÄISCHE PATENTSCHRIFT

(45) Veröffentlichungstag der Patentschrift:
06.11.85

(51) Int. Cl.⁴: **C 09 C 1/30**

(21) Anmeldenummer: **82107742.7**

(22) Anmeldetag: **24.08.82**

(54) Verfahren zur Verringerung des Grindometerwertes von hochdispersen Kieselsäuren.

(30) Priorität: **01.10.81 DE 3139070**

(43) Veröffentlichungstag der Anmeldung:
**13.04.83 Patentblatt 83/15**

(45) Bekanntmachung des Hinweises auf die Patenterteilung:
**06.11.85 Patentblatt 85/45**

(84) Benannte Vertragsstaaten:
**AT BE CH DE FR GB IT LI LU NL SE**

(56) Entgegenhaltungen:
**EP - A - 0 008 613**
**CH - A - 608 469**
**DE - A - 2 304 602**
**DE - B - 1 567 423**

(73) Patentinhaber: **Degussa Aktiengesellschaft,
Weissfrauenstrasse 9, D-6000 Frankfurt am Main 1 (DE)**

(72) Erfinder: **Schwarz, Rudolf, Dr., Taunusstrasse 2,
D-8755 Alzenau (DE)**
Erfinder: **Kleinschmit, Peter, Dr., Wildaustrasse 19,
D-6450 Hanau 9 (DE)**
Erfinder: **Ettlinger, Manfred, Dr., Stifterstrasse 22,
D-8757 Karlstein (DE)**

## Beschreibung

Die Zerkleinerung von Stoffen zu Mehlen (50-500 µm), Pudern (5-50 µm) und noch grösseren Feinheiten (< 5 µm) ist in der Praxis allgemein üblich. Es werden für alle Zerkleinerungsaufgaben eine Vielzahl von technischen Einrichtungen angeboten und betrieben, die den Besonderheiten der einzelnen Aufgaben angepasst sind. Eine gute Übersicht über die Zerkleinerungsprobleme und die diversen Maschinen wird in Ullman's Enzyklopädie der technischen Chemie, 3 Auflage Band 1, Seite 616 bis Seite 638 gegeben.

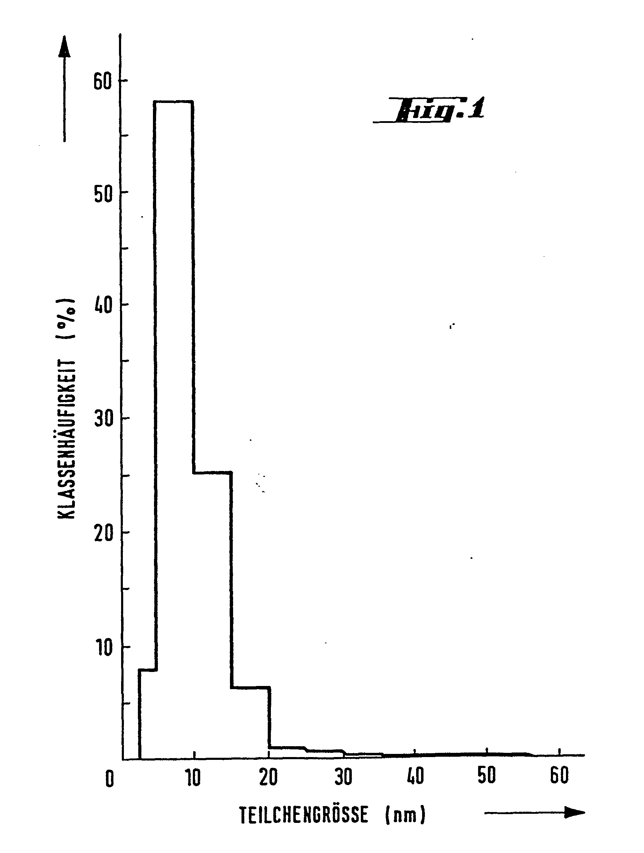

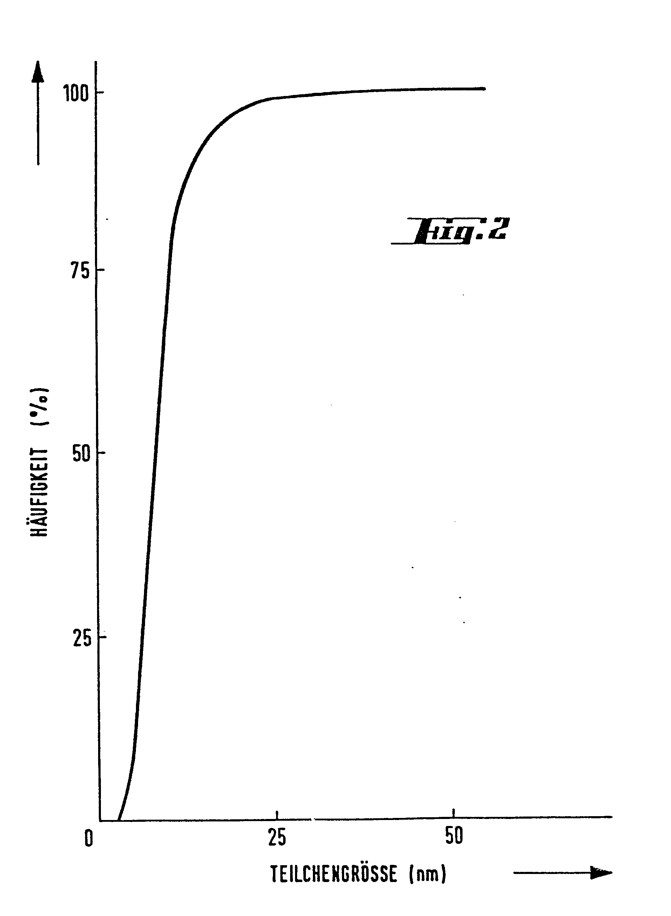

Nun gibt es aber eine Stoffgruppe, deren mittlere primäre Teilchendurchmesser beachtlich geringer sind (5-50 nm), als sie durch mechanische Zerkleinerung erhalten werden können. Das ist die Stoffgruppe der hochdispersen Kieselsäuren, insbesondere der pyrogenen, also aus der Gasphase gewonnenen Kieselsäuren, deren Primärteilchen- und Aggregat-Verteilung durch graphische Darstellungen gemäss Figuren 1 und 2 die als Beispiele eine pyrogene Kieselsäure der spezifischen Oberfläche von ca. 200 m²/g, zeigen, dargestellt werden kann.

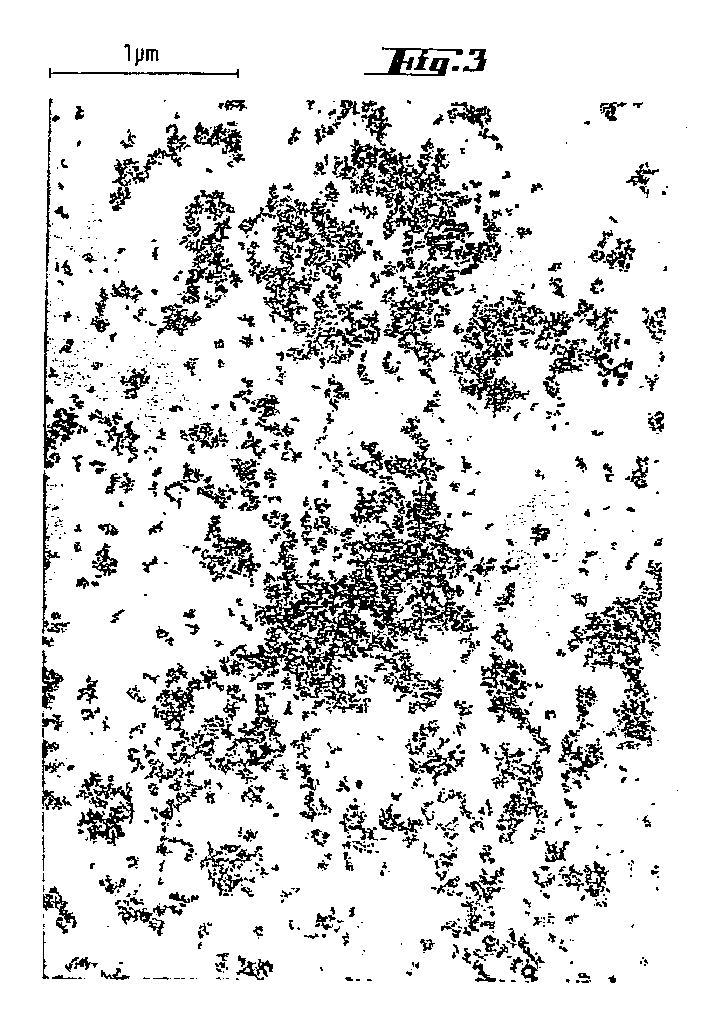

Die Primärteilchen und Aggregate der pyrogenen Kieselsäure mit einer Oberfläche von 200 m²/g können im Elektronenmikroskop sichtbar gemacht werden. Eine entsprechende Aufnahme zeigt die Fig. 3.

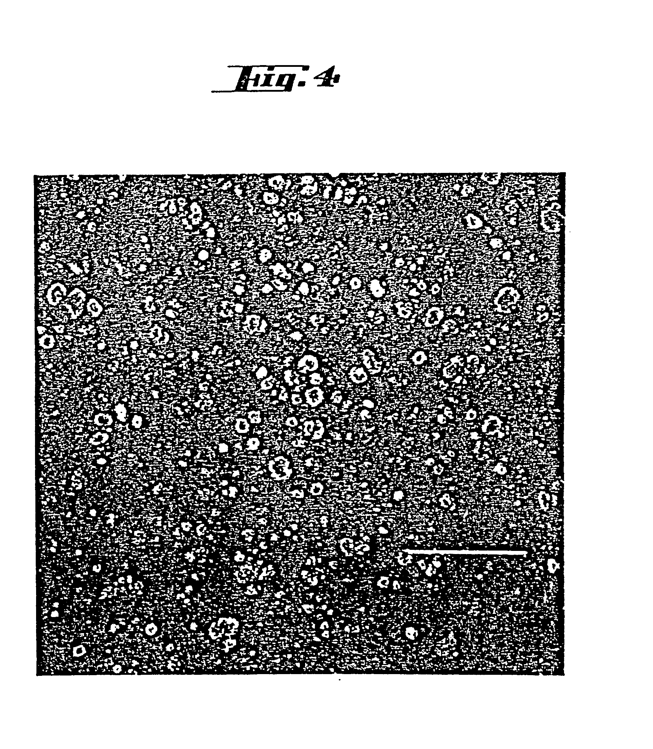

Die Primärteilchen und Aggregate einer pyrogenen Kieselsäure lagern sich zu grösseren Verbänden, den Agglomeraten zusammen, die im Regelfall umso grösser sind, je geringer die Primärteilchengrösse bzw. je grösser die spezifische Oberfläche und je stärker das Material verdichtet ist. Das elektronenoptische Foto gemäss Fig. 4 zeigt eine relativ stark agglomerierte pyrogene Kieselsäure.

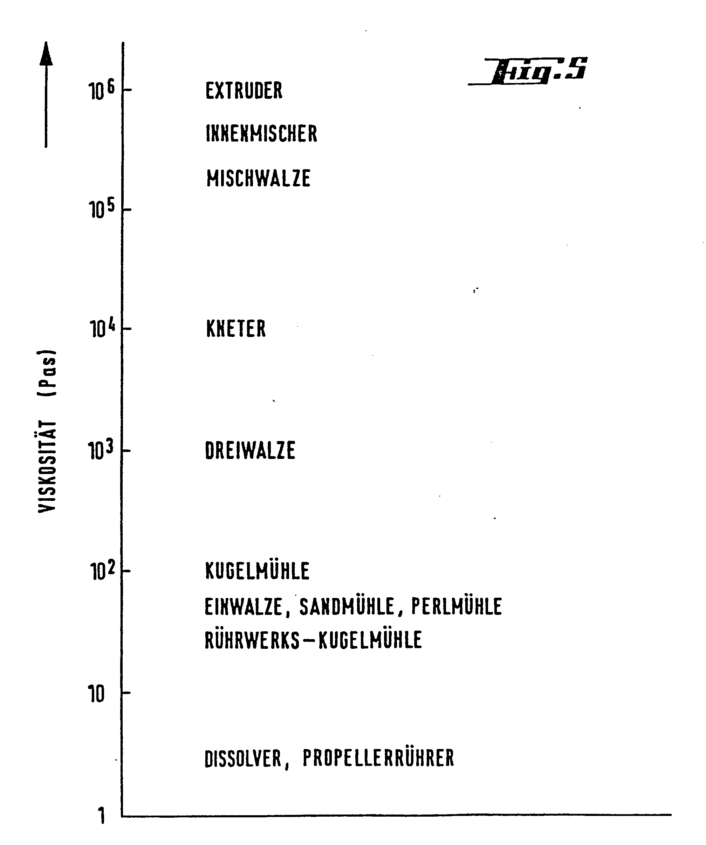

Die Bindungskräfte, mit denen diese Agglomerate zusammengehalten werden, sind relativ schwach. Dennoch bedarf es bei der Einarbeitung und Auflösung dieser Agglomerate in einem flüssigen System zum Zweck der homogenen Verteilung der Primärteilchen und Aggregate bzw. niedrig agglomerierter Partikel eines gewissen Scheraufwandes. Für die Dispergierung werden je nach Anwendungsgebiet die verschiedensten Mischgeräte eingesetzt, wobei die Viskosität und Polarität des Systems als auch die Agglomeratfestigkeit und die gewünschte Homogenität für die Auswahl bestimmend sind. Die Fig. 5 gibt einen Überblick über die gängigsten Geräte im Bereich der Lacke, Farben und Kunststoffe.

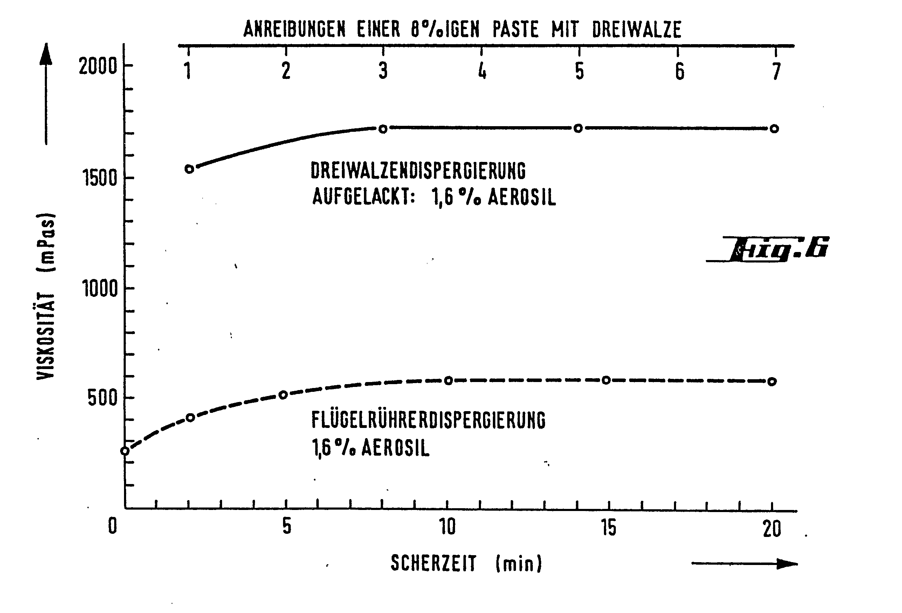

Mit einfachen Rührwerken, z.B. Flügelrührern, ist die direkte Einarbeitung kleiner Mengen Kieselsäuren meist nicht befriedigend durchführbar, besonders dann nicht, wenn es sich um niedrigviskose Systeme handelt. Andererseits sind die Lack- und Farbenhersteller und die Verarbeiter daran interessiert, eine anwendungstechnisch optimale Verteilung der überwiegend als Verdickungs- und Thixotropierungsmittel zur Anwendung gelangenden Kieselsäuren mit einfachsten Geräten und möglichst geringem zeitlichen und energetischen Aufwand zu erzielen. In Fig. 6 sind die Unterschiede in der Viskositätserhöhung bei schlechter direkter Einarbeitung mit einem Flügelrührer und guter Dispergierung über eine 8%ige Stammpaste eines ungesättigten Polyesterharzes mit der Dreiwalze dargestellt.

Im Falle der Flügelrührer-Dispergierung werden die groben Kieselsäureagglomerate nicht genügend zerkleinert und können so nur einen kleinen Beitrag zur Anhebung von Viskosität und Thixotropie leisten. Die Angaben beziehen sich auf ein UP-Harz (ungesättigtes Polyester-Harz) als Dispersionsmittel.

Eine Verminderung der Agglomeratgrösse durch Dispergierung ausserhalb eines flüssiges Systems, also praktisch an der Luft, oder durch Mahlung im herkömmlichen Sinne ist nur im begrenzten Umfange möglich, denn bei gegebener Agglomerationsneigung des Materials stellt sich im Anschluss an die Zerkleinerung alsbald der alte Agglomeratzustand wieder ein. Dieser Effekt trifft spätestens jedoch nach erneuter Verdichtung des durch den mechanischen Eingriff stark aufgelockerten und in dieser Form nicht versand- und lagerfähigen Materials ein. Auch die Lagerzeit würde sich im Sinne erneuten Agglomeratvergrösserung auswirken.

Als Masszahl und Bewertungsgrösse für den Verteilungszustand einer dispergierten Kieselsäure und maximale Agglomeratgrösse der Dispersion (Körnigkeit) gilt der sogenannte Grindometerwert nach DIN 53 203.

Es wurde nun gefunden, dass sich der Grindometerwert, beispielsweise einer UP-Harz (ungesättigtes Polyester-Harz)/Kieselsäure-Dispersion, dadurch verbessern lässt, dass man die Kieselsäure einem Mahlprozess mit einem geeigneten Gerät unterzieht und den an sich labilen Zustand einer niedrigen Agglomeratgrösse dadurch stabilisiert, dass man die Agglomeratbruchstücke des Mahlprozesses an der Reagglomeration durch geeignete Modifizierung der Oberfläche hindert.

Gegenstand der Erfindung ist ein Verfahren zur Verbesserung der Dispergierbarkeit hochdisperser Kieselsäuren, welches dadurch gekennzeichnet ist, dass man die hochdisperse Kieselsäure vermahlt und gleichzeitig deren Oberfläche modifiziert, indem man die Vermahlung der hochdispersen Kieselsäure in Gegenwart einer hydrophobierten (oberflächenmodifizierten) Kieselsäure durchführt.

Als besonders vorteilhaft hat sich die Anwendung von 0,1 bis 5% hydrophober Kieselsäure bzw. Modifizierungsmittel ergeben. In einer bevorzugten Ausführungsform kann als hydrophobe Kieselsäure eine pyrogene, hydrophobe Kieselsäure eingesetzt werden.

Für die Vermahlung eignen sich in bevorzugter Weise Stift- und Strahlmühlen.

Bei den Stiftmühlen lagert sich über den Schlag- und Prallimpulsen eine zusätzliche Reibung durch die hohe Luftströmung und Wirbel, die sich für die Zerkleinerung von Agglomeraten als besonders wirksam ung gleichzeitig schonend erwiesen hat.

Ganz besonders geeignet erwiesen sich Strahlmühlen. Hierbei werden die Produktteilchen in dem Gasstrahl hoher Geschwindigkeit und Turbulenz suspendiert, wobei sie sich gegenseitig zerreiben.

Das erfindungsgemässe Verfahren kann bei allen bekannten Kieselsäuren wie z.B. grfällten Kieselsäuren, pyrogen hergestellten Kieselsäuren oder Lichtbogenkieselsäuren angewandt werden.

Vorzugsweise wird es bei pyrogen hersgestellten Kieselsäuren angewandt.

Modifizierungsart und Modifizierungsmittel können sehr vielgestaltig sein. Wesentlich ist nur, dass das modifizierende oder modifizierte Agens simultan im Bereich des Mahlorgans verfügbar ist. Denn es hat sich gezeigt, dass die Trenn- und Bruchstellen des Mahlgutes insbesondere durch Ladungsungleichgewichte eine besonders hohe Reaktivität aufweisen, wodurch es durch Ladungsausgleich und Brückenbildung zu einer spontanen oder sukzessiven Rekombinierung des Materials zu höheren Aggregaten und Agglomeraten kommt. Um das zu verhindern oder zu mindern, bedarf es der momentanen Absättigung bzw. Abdeckung dieser reaktiven Zentren gleichzeitig bei dem Mahlprozess. Das kann dadurch geschehen, dass man der Kieselsäure vor der Vermahlung in Anteilen von einigen Prozent eine bereits organisch voll modifizierte Kieselsäure ähnlicher Teilchengrösse homogen zumischt, wobei der Homogenität der Einmischung insofern Bedeutung zukommt, als nur bei der nachfolgenden Vermahlung die Präsenz organisch modifizierter Bruchstücke in allen Raumteilen des Mahlgutes gewährleistet ist. Diese lagern sich an die reaktiven Zentren an und können als Distanzmaterial eine Reagglomeration verhindern. Die Agglomerationsneigung einer organisch modifizierten Kieselsäure nämlich ist weit weniger ausgeprägt, als die einer Kieselsäure, die an ihrer Oberfläche Silanolgruppen prosser Flächendichte trägt. Denn Silanolgruppen sind in der Lage, Wasserstoffbrückenbindungen ggf. unter Zwischenschaltung von Wassermolekülen als Brückenglieder, auszubilden, wodurch die Agglomeratbildung bewirkt wird.

Die gleiche Ursache haben auch die Verdickungs- und Thixotropie-Effekte, die man im Lack- und Farbenbereich im grossen Umfange zu nutzen weiss.

Bevorzugte Hydrophobierungsmittel sind Organosilane und darunter insbesondere die Verbindungen Trimethylchlorsilan, Dimethyldichlorsilan oder deren Ester wie Trimethylmonoäthoxysilan und Hexamethyldisilazan. Auch mit langkettigen organischen Liganden ausgerüstete Silane werden bevorzugt für die Hydrophobierung verwendet.

Eine pyrogene Kieselsäure, mit einer BET-Oberfläche von $200 \pm 2,5$ $m^2/g$ wie sie zum Beispiel als Aerosil 200 im Handel ist, besitzt einen in UP-Harz (ungesättigtes Polyesterharz Ludopal P 6 der BASF) 2%ige Dissolverdispergierung) nach der DIN-Vorschrift bestimmten Grindometerwert von 50-60, wenn diese Ware nicht nach der erfindungsgemässen Methode behandelt wurde. Ist diese pyrogene Kieselsäure zusätzlich höher verdichtet (100-120 g/l), so liegt auch der Grindometerwert deutlich höher, nämlich bei > 100, wodurch ein zusätzlicher, nicht unerheblicher Aufwand zur Dispergierung bei Anwendung als Verdickungs- und Thixotropierungsmittel erforderlich ist. Demgegenüber lässt sich durch die erfindungsgemässe Modifizierung und Nachvermahlung eine beträchtliche Absenkung der Grindometerwerte auch bei Höherverdichtung erzielen.

Das erfindungsgemässe Verfahren wird anhand der folgenden Beispiele näher erläutert:

*Beispiel 1*

In eine pyrogene Kieselsäure des Typs Aerosil 200 (Handelsprodukt der Degussa AG) mit einer spezifischen Oberfläche von ca. 200 $m^2/g$ werden 3 Gew.-% der mit Dimethyldichlorsilan hydrophobierten, ebenfalls pyrogenen Kieselsäure R 972, (Handelsprodukt) mit Hilfe eines Lödige-Mischers bekannter Bauart homogen eingemischt. Die modifizierte Mischung wird anschliessend in einer Luftstrahlmühle des Typs Condux CLM 60 bei einem Strahldruck von 4 bar und einer Beaufschlagung von 1 kg/h vermahlen. Anschliessend wird das Produkt nach einer bekannten Methode auf 73 g/l verdichtet. Dispergiert man nun wieder gemäss den DIN-Prüfverfahren, so lässt sich ein Grindometerwert von nur 35 ermitteln. Bei Anwendung von 5% mit Dimethyldichlorsilan hydrophobierter Kieselsäure, bezogen auf den Einsatz an hydrophiler Kieselsäure, die aber einen Verdichtungsgrad von 107 g/l aufweist, ist die nachträgliche Dispergierbarkeit vergleichbar entsprechend einem Grindometerwert von ebenfalls 35.

*Beispiel 2*

Eine pyrogene Kieselsäure mit 300 $m^2/g$ spezifischer Oberfläche des Typs Aerosil 300 (Handelsprodukt der Degussa AG) weist im unverdichteten Zustand einen Grindometerwert von 75-80 auf und nach der Verdichtung entsprechend einem Stampfgewicht von 83,8 g/l einen solchen von $\geq$ 100. Werden in diese schwer dispergierbare Kieselsäure 3% HDKH 2000 (eine unter diesem Handelsnamen erhältliche, hydrophobe Kieselsäure der Firma Wacker) mit Hilfe eines Lödige-Mischers oder eines sonstigen geeigneten Geräts homogen eingemischt und anschliessend in einer Stiftmühle des Typs Alpine 1607 gemeinsam vermahlen, so lässt sich nach diesen Massnahmen bei einem Stampfgewicht von 28,1 g/l ein Grindometerwert von 10 und nach der Verdichtung auf etwa 50 g/l ein solcher von 15-20 feststellen.

*Beispiel 3* (Vergleichsbeispiel)

Eine pyrogene Kieselsäure mit 300 $m^2/g$ spezifischer Oberfläche/Aerosil 300, Handelsprodukt der Degussa AG) wird gemäss Beispiel 2, jedoch unter Verzicht auf die Einmischung einer hydrophoben Kieselsäure, lediglich in einer Stiftmühle vermahlen. Der Grindometerwert der unverdichteten Kieselsäure beträgt nach dieser Massnahme zunächst 25. Verdichtet man die Kieselsäure auf 50 g/l, so steigt der Grindometerwert auf 30 an und bei weiterer Verdichtung auf 75 g/l sogar auf etwa 40. Wenn man die vermahlene, aber nicht modifizierte Kieselsäure längere Zeit lagert, so lässt sich ebenfalls eine Zunahme des Grindometerwertes feststellen. So weist eine gemahlene, nicht modifizierte und auf 50 g/l verdichte Kieselsäure nach 3 Monaten einen Wert von 50-60 auf.

**Patentanspruch**

Verfahren zur Verringerung des Grindometerwertes von Dispersionen hochdisperser Kieselsäuren, dadurch gekennzeichnet, dass man die hochdisperse Kieselsäure vermahlt und gleichzeitig deren Oberfläche modifiziert, indem man die hochdisperse Kieselsäure im Gemisch mit einer hydrophobierten Kieselsäure vermahlt.

**Revendication**

Procédé de réduction de la valeur au «grindometer» de dispersions d'acides siliciques hautement dispersés, caractérisé en ce que l'acide silicique hautement dispersé est broyé et que simultanément, sa surface est modifiée, le broyage de l'acide silicique hautement dispersé s'effectuant en mélange avec un acide silicique rendu hydrophobe.

**Claim**

A process for reducing the grindometer value of dispersions of highly-dispersed silica, characterized in that the highly-dispersed silica is ground and the surface thereof is simultaneously modified by grinding the highly-dispersed silica in admixture with hydrophobized silica.

Fig.1

Fig.2

HÄUFIGKEIT (%)

TEILCHENGRÖSSE (nm)

1µm

*Fig.3*

_Fig. 4_

**Fig. 5**

$10^6$  EXTRUDER

INNENMISCHER

MISCHWALZE

$10^5$

$10^4$  KNETER

VISKOSITÄT (Pas)

$10^3$  DREIWALZE

$10^2$  KUGELMÜHLE

EINWALZE, SANDMÜHLE, PERLMÜHLE

RÜHRWERKS−KUGELMÜHLE

$10$

DISSOLVER, PROPELLERRÜHRER

$1$

ANREIBUNGEN EINER 8%IGEN PASTE MIT DREIWALZE

DREIWALZENDISPERGIERUNG
AUFGELACKT: 1,6 % AEROSIL

Fig.6

FLÜGELRÜHRERDISPERGIERUNG
1,6 % AEROSIL

VISKOSITÄT (mPas)

SCHERZEIT (min)